# EUROPÄISCHE PATENTSCHRIFT

(11) **EP 1 262 798 B1**
(45) Veröffentlichungstag und Bekanntmachung des Hinweises auf die Patenterteilung: **19.12.2012**
(21) Anmeldenummer: 02008609.6
(22) Anmeldetag: 17.04.2002
(51) Int. Cl.: G01V 5/00, G01N 23/04

(54) **Verfahren und Gerät zur Untersuchung von Gepäck und anderer Gegenstände**
Device and method for inspection of baggage and other objects
Dispositif et procédé d'inspection de baggage et d'autres objects

(30) Priorität: 23.05.2001 DE 10125531
(43) Veröffentlichungstag der Anmeldung: 04.12.2002
(73) Patentinhaber: Smiths Heimann GmbH, 65205 Wiesbaden (DE)
(72) Erfinder: Beneke, Knut, 55270 Ober-Olm (DE); Siedenburg, Uwe, 55270 Essenheim (DE); Thoma, Helmut, 55131 Mainz (DE); Naumann, Dirk, 64653 Lorsch (DE)
(74) Vertreter: Thul, Hermann

(56) Entgegenhaltungen:
- US-A- 5 175 756
- US-A- 5 754 617
- US-A- 6 088 423
- US-A- 6 163 591

## Beschreibung

Die Erfindung betrifft eine Inspektionsanlage u.a. zur Prüfung für Objekte, insbesondere nach Spreng- und/ oder Explosivstoffen in Reisegepäckstücken.

Im Rahmen erhöhter Sicherheitsanforderungen auch auf Flughäfen und in anderen öffentlichen Einrichtungen ist es notwendig, Röntgen- bzw. Inspektionsanlagen in bereits vorhandene Einrichtungen, wie beispielsweise in einen Check-In-Counter eines Flughafens, nachzurüsten, die insbesondere Spreng- und/oder Explosivstoffe detektieren können. Häufig seht dabei für eine derartige Nachrüstung nur wenig Platz für eine Integration zur Verfügung.

Aus der EP 0 485 872 A2 ist eine Einrichtung zur Erkennung von stickstoff-, phosphor-, chlor- und/oder sauerstoffhaltigen Substanzen bekannt. An einer Kante eines Transportschachtes liegen hierbei zwei Röntgenquellen in Transportrichtung nahe beieinander. Eine dritte Röntgenquelle ist den beiden Röntgenquellen gegenüberliegend angeordnet, so daß diese Strahlen um 90 ° versetzt gegenüber den beiden anderen Projektionen verlaufen.

Eine Anordnung der gattungsnahen Art wird in der US 6,088,423 offenbart. Hierin wird ein Inspektionssystem mit drei Röntgenquellen beschrieben, deren Strahlen bzw. Strahlenebenen annähernd parallel zueinander ausgerichtet sind. Dabei sind die Röntgenquellen in Transportrichtung und zueinander beabstandet um einen Transportschacht angeordnet, wobei sich zwei Röntgenquellen an einer Seite und die dritte Röntgenquelle unterhalb des Schachtes befinden.

Beide vorgenannten Anordnungen sind für Nachrüstungen mit geringem Platzangebot für eine Inspektionsanlage nicht verwendbar.

Hieraus ergibt sich die Aufgabe der Erfindung, eine Inspektionsanlage anzugeben, die mit geringem Platz auskommt und somit auch zur Nachrüstung geeignet ist.

Gelöst wird die Aufgabe durch die Merkmale des Patentanspruchs 1.

Der Erfindung liegt die Idee zugrunde, zumindest den verfügbaren Bereich als Transportschacht zu nutzen, um den Strahlenquellen angeordnet sind, die wenigstens drei Strahlen erzeugen, auf die entsprechende Detektorzeilen ausgerichtet sind und einen notwendigen Strahlentunnel dadurch zu schaffen, in dem vorhandene Anlagenteile einer fremden separaten Einrichtung in die Inspektionsanlage oder umgekehrt eingebunden werden. Somit wird zumindest ein Anlagenteil oder ein ganzer Abschnitt der separaten Einrichtung mitbenutzt, welche in übergreifender Form somit Teilbestand der Inspektionsanlage wird, ohne daß das Anlagenteil selbst aus der eigentlichen Einrichtung herausgetrennt oder dessen eigentlicher funktionaler Gebrauch eingeschränkt wird.

Bei einem Transportsystem, in welches die Inspektionsanlage nachgerüstet werden soll, wird dazu vor dem Transportschacht eine Abschirmhaube auf bzw. um das Anlagenteil der Transporteinrichtung zur Abschirmung der Strahlen aufgesetzt. Bei Einbindung zumindest eines diesem Bereich nachfolgenden Anlagenteils des Transportsystems kann auch hier eine Abschirmung als Haube auf bzw. um dieses Anlagenteil gesetzt werden. Häufig bietet sich jedoch die direkte Integration in ein abschirmendes Gehäuse der Inspektionsanlage an.

In derartigen Transportsystemen beträgt der für die Strahlenquellen und Detektorzeilen nutzbare Bereich häufig maximal eine maximale Reisegepäckstücklänge.

Vorzugsweise werden drei Strahlenquellen zur Erzeugung der wenigstens drei Strahlen eingebaut, auf die je eine Detektorzeile ausgerichtet ist.

In einer Ausgestaltung der Inspektionsanlage werden um den Transportschacht die Strahlenebenen der drei Strahlen der Strahlenquellen in Transportrichtung nahe beieinander angeordnet. Dieser Transportschacht kann durch die Einbindung des wenigstens einen nachfolgenden Anlagenteils, das ebenfalls oftmals nur eine maximale Reisegepäckstücklänge aufweist, somit auf zwei maximale Reisegepäckstücklängen verlängert werden. Der Abstand zwischen der hintersten, dritten Strahlenebene bis zum Ende des nachfolgenden Anlagenteils darf in diesem Fall eine maximale Reisegepäckstücklänge nicht unterschreiten, da sonst das Objekt nicht vollständig von der dritten Strahlenebene erfaßt wird. Bei diesem Anlagenteil kann es sich um ein höhenverstellbares Absenkband handeln.

Weist der nachfolgende Abschnitt ein im Transportsystem tiefer angeordnetes Band auf, werden in einer weiteren Ausgestaltung der Inspektionsanlage die Strahlenebenen der Strahlenquellen noch näher zueinander ausgerichtet. Dabei sollte die dritte Strahlenebene dann einen minimalen Abstand von einer halben maximalen Reisegepäckstücklänge bis zum Ende des zur Verfügung stehenden Bereiches nicht unterschreiten. Dadurch wird vermieden, daß das Objekt auf das nachfolgende, tiefer angeordnete Band kippt, während es sich noch in der dritten Strahlenebene befindet und somit das Meßergebnis verfälscht werden würde. Die drei Strahlenquellen sowie die drei Detektorzeilen sind zudem in bevorzugter Weise innerhalb der vorderen Hälfte des zur Verfügung stehenden Bereiches angeordnet.
Durch ein gleich hohes Einförderband wird das Kippen beim Einfördern in den zur Verfügung stehenden Bereich vermieden.

Weiter vorteilhafte Ausführungen sind in weiteren Unteransprüchen aufgezeigt.

So sind maximal je zwei Strahlenquellen wahlweise an einer Seite des Transportschachtes anbringbar, wobei die dritte Strahlenquelle sich an einer anderen Seite befindet.

Vorzugsweise befindet sich keine der Strahlenquellen unterhalb des Transportsystems bzw. des Transportschachtes.

In Weiterführung der Erfindung sind zwei Detektorzeilen in einer gemeinsamen Zeilenhalterung untergebracht, wobei die beiden Detektorzeilen zumindest in einem definierten Abschnitt voneinander getrennt sind.

In Weiterführung der Erfindung ist ein sich schließender Vorhang oder Rolladen in der Abschirmung integriert, welcher in bevorzugter Variante am Eingang bzw. am Anfang der Abschirmung angebracht ist. Zudem kann der Einbau einer Kamera vorgesehen werden, um die ordnungsgemäße Funktion der Anlagenteile zu überwachen, die mit der Abschirmung überdeckt sind.

Anhand von zwei Ausführungsbeispielen mit Zeichnung soll die erfinderische Idee näher erläutert werden, aus denen sich weitere Vorteile ergeben. Die Zeichnung, die Beschreibung und die Ansprüche enthalten zahlreiche Merkmale in Kombination, die der Fachmann zweckmäßigerweise auch einzeln betrachten und zu sinnvollen weiteren Kombinationen zusammenfassen wird.

### Es zeigt

- Fig. 1: ein vorhandenes, bekanntes Transportsystem, in dem eine Inspektionsanlage nach einer ersten Ausführungsform integriert werden soll, in Seitendarstellung,
- Fig. 2: den Transportschacht der Inspektionsanlage im Schnitt A-A aus Fig. 1,
- Fig. 3: das Transportsystem aus der Fig. 1 mit eine weitere Ausführungsform und der Inspektionsanlage.

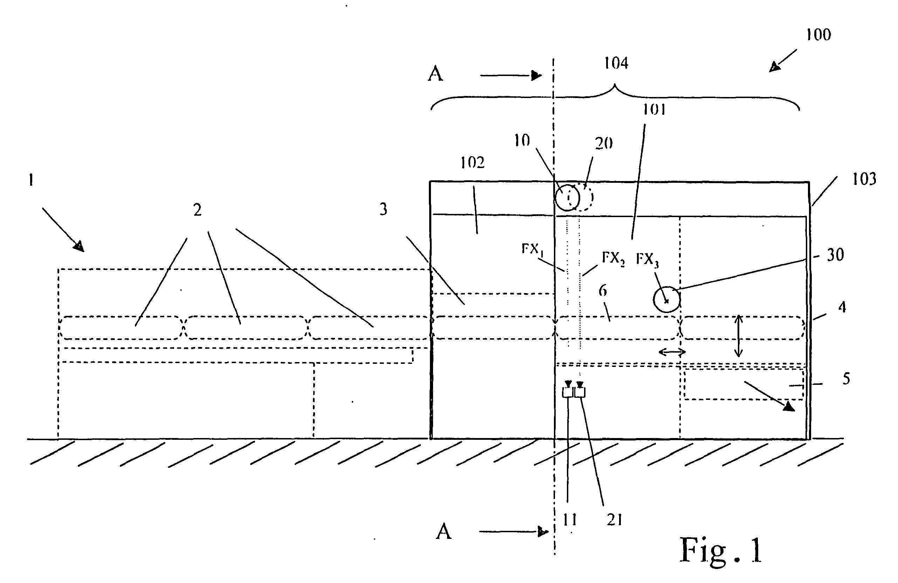

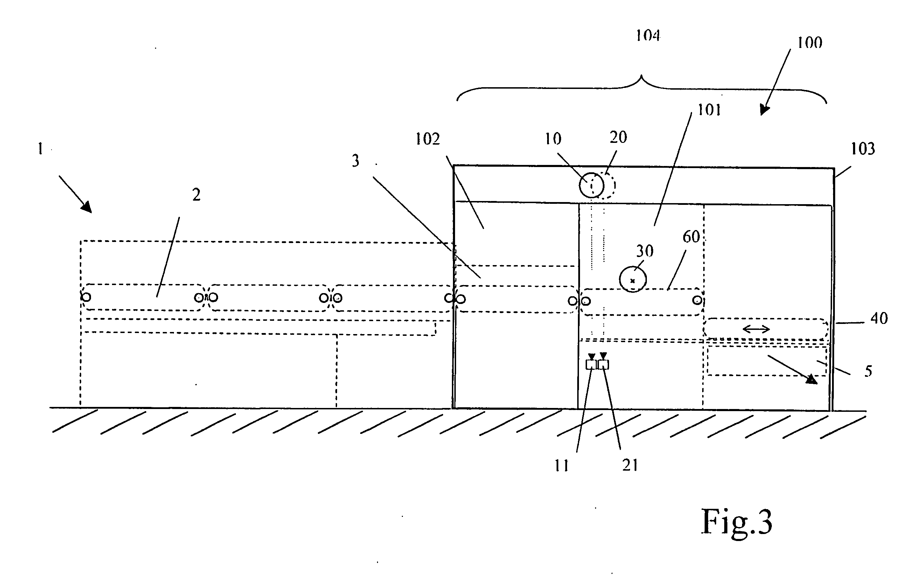

In Fig. 1 ist, wie auch in Fig. 3, mit 1 eine von einer Inspektionsanlage 100 funktional unabhängige Einrichtung, hier ein Transportsystem gekennzeichnet, die mit der Inspektionsanlage 100 nachgerüstet werden soll. Das Transportsystem 1 weist dabei einzelne Transportbänder 2 auf, die Objekte 90 (hier nicht dargestellt), beispielsweise ein Koffer oder andere Reisegepäckstücke, zu einem sogenannten Umwerfer oder Kippband 3 transportieren. Dieser bringt die auf den Bändern 2 stehenden Reisegepäckstücke 90 in eine horizontale Lage und zentriert sie für den weiteren Transport. Dem schließen sich ein Band 6 und ein Band 4 an. Am Ende der Transportstrecke des Transportsystems 1 wird das Reisegepäckstück 90 vom Band 4 aus in eine Wanne 5 gelegt. Das Band 4 wird dazu unter das Band 6 verfahren, wozu das Band 4 gegenüber dem Band 6 tiefer angebracht ist. Die Wanne 5 wird danach mit dem Reisegepäckstück 20 und aus dem Transportsystem 1 in ein weiteres, nicht näher dargestelltes Transportsystem übergeben.

Die Prüfung der Reisegepäckstücke 90 auf unzulässige Gegenstände, insbesondere auf Spreng- und Explosivstoffen in den Reisegepäckstücken 90, soll hierbei nach dem Kippband 3 erfolgen. Dieser Bereich, der durch das Band 6, 60 gebildet wird, ist jedoch sehr kurz für eine derartige Nachrüstung, da die Länge des Bandes 6, 60 typischer Weise maximal der einer maximalen Reisegepäckstücklänge entspricht, die in der Praxis bei 100 cm liegt.

In einer ersten Ausführungsform nach Fig. 1 ist nun vorgesehen, um das, dem Kippband 3 nachfolgende Band 6 Strahlenquellen, hier drei, 10, 20, 30, mit darauf ausgerichteten Detektorzeilen 11, 21, 31 (der Übersichtlichkeit halber sind nur die sichtbaren und diese als kleine Kästchen dargestellt) in Transportrichtung des Reisegepäckstückes 90 (in Reisegepäcklaufrichtung) anzuordnen. Die Länge dieses Bandes 6 bestimmt dabei einen Transportschacht 101, der Teil eines Strahlentunnels 104 der Inspektionsanlage 100 ist. Durch die Einbindung des dem Band 6 nachfolgenden Anlagenteils 4 des Transportsystems 1, hier eines absenkbaren Bandes, kann dieser Strahlentunnel 104 bzw. der Transportschacht 101 verlängert werden. Dieser ist dann, wenn das absenkbare Band 4 gleichfalls nur maximal eine Reisegepächstück- bzw. Kofferlänge beträgt, zwei maximale Reisegepäckstücklängen lang. In diesem Fall steht für den Einbau der Strahlenquellen 10, 20, 30 und der Detektorzeilen 11, 21, 31 der Bereich des gesamten Bandes 6 zur Verfügung.
Mit Hilfe der Strahlen FX₁, FX₂ sowie FX₃ wird das zu prüfende Reisegepäckstück 90 aus drei Strahlrichtungen, d.h. in drei Strahlenebenen durchleuchtet, wobei die von den zugehörigen Detektorzeilen 11, 21, 31 erzeugten Signale in bekannter Art und Weise ausgewertet werden. Dabei wird das Reisegepäckstück 90 auf das sich in gleicher Ebene mit dem Band 6 befindliche Absenkband 4 transportiert und in bekannter Art und Weise in das weitere, nicht näher dargestelltes Transportsystem überführt.

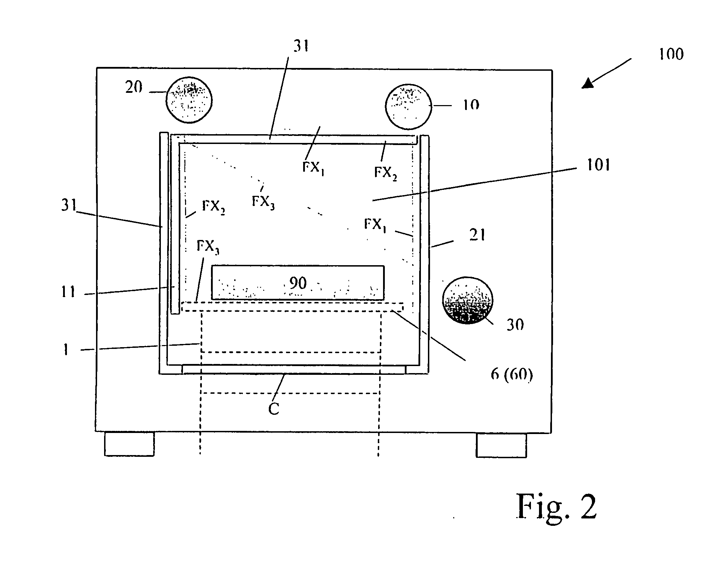

Im Ausführungsbeispiel sind die Strahlenquelle 10 als auch die Strahlenquelle 20 an der oberen Seite, vorzugsweise an den oberen Ecken des Transportschachtes 101 angeordnet, wie in Fig. 2 erkennbar. Ihnen gegenüberliegend sind, wie bereits erwähnt, auf die Strahlen FX₁ und FX₂ der Strahlenquellen 10 und 20 die Detektorzeilen 11 bzw. 21 ausgerichtet. Die Detektorzeile 31 ist auf den Strahl FX₃ der dritten Strahlenquelle 30 ausgerichtet.

Ist das Anlagenteil 4 ein gegenüber dem vorhergehenden Bereich, hierbei ein Band 60, tiefer angebrachtes Band 40, ist in einer weiteren Ausführungsform nach Fig. 3 vorgesehen, die drei Strahlenquellen 10, 20, 30 mit darauf ausgerichteten Detektorzeilen 11, 21, 31 (der Übersichtlichkeit halber sind nur die sichtbaren und diese als Kästchen dargestellt) in Transportrichtung des Reisegepäckstückes 90 innerhalb des vorderen Bereiches des Bandes 60 anzuordnen, so daß die Strahlenquellen 10, 20, 30 als auch die Detektorzeilen 11, 21, 31 sehr nahe beieinander angeordnet werden. Der Abstand zwischen der dritten (letzten) Strahlenebene des Strahls FX₃ und dem Ende des Bandes 60 darf dann eine halbe maximale Reisegepäckstücklänge nicht unterschreiten, so daß alle Strahlenebenen FX₁ - FX₃ in der vorderen Hälfte des Bandes 60 anzuordnen sind. Mit Hilfe der dabei nahe beieinander liegenden Strahlen FX₁, FX₂, FX₃ wird auch hier das zu prüfende bzw. zu untersuchende Reisegepäckstück 90 aus drei Strahlrichtungen durchleuchtet, wobei die von den zugehörigen Detektorzeilen 11, 21, 31 erzeugten Signale in bekannter Art und Weise ausgewertet werden, um insbesondere das Vorhandensein von Spreng- und/ oder Explosivstoffe zu detektieren. Hieran schließt sich das Band 40 an, auf das das Reisegepäckstück 90 gelangt. Das Ausschleusen des Reisegepäckstückes aus dem Transportsystem 1 erfolgt dann wie beschrieben.

Um den Strahlenschutzbedingungen bzw. -anforderungen zu genügen, sieht die Inspektionsanlage 100 (nach Fig. 1 als auch nach Fig. 3) eine mit dem Transportschacht 101 zusammenwirkende vordere Abschirmung 102 vor, die bevorzugt als Abschirmhaube über wenigstens eine im Transportsystem 1 vorhandene Einrichtung bzw. ein Anlagenteil gestülpt wird und somit in idealer Weise den Strahlentunnel 104 nach vorne verlängert, so daß keine Strahlen dorthin austreten können.
Bei dem hier vorliegenden Transportsystem 1 bietet sich somit das Kippband 3 an, über den die Abschirmung 102 gesetzt wird.

In einer weiterer vorteilhaften Variante ist in der Abschirmung 102 ein sich schließender Vorhang oder Rolladen integriert, welcher vorzugsweise am Eingang der Abschirmung 102 angebracht ist und damit auch den Eingang des Kippbandes 3 während des eigentlichen Prüfvorganges verschließt (in den Figuren nicht näher dargestellt).

Bei Einbindung des nach dem Transportschacht 101 befindlichen Anlagenteils 4, 40 wird in einer bevorzugten Ausgestaltung dieses Anlagenteil 4, 40 in ein abschirmendes Gehäuse 103 der Inspektionsanlage 100 integriert, um die Abschirmung der Strahlen , hier der Röntgen- oder Gammastrahlen, zu gewährleisten.

Da in der Praxis die maximale Reisegepäckstücklänge ca. 100 cm beträgt, wird mit der vorgenannten Lösung eine Inspektionsanlage 100 aufgezeigt, die mit geringem Aufwand in einen kurzen Bereich einbaubar ist. Das Band 4 als auch das Band 40 weisen in der Praxis gleichfalls maximal nur eine maximale Reisegepäckstücklänge auf.

Weiterhin ist es vorteilhaft, eine Kamera (nicht näher dargestellt) innerhalb der Abschirmung 102 zu installieren, um die sachgemäße Arbeit auf dem Kippband 3 kontrollieren zu können.

Im Rahmen der Erfindung ist es auch möglich, die beiden Detektorzeilen 11, 21 in einer gemeinsamen Zeilenhalterung unterzubringen, wobei die Detektorzeilen 11, 21 zumindest im sich überlappenden Bereich "C" voneinander optisch zu trennen sind, beispielsweise durch eine Lichtabschattung. Die Detektorzeilen 11, 21 und 31 bestehen aus mehreren, parallel arbeitenden Detektorpaaren, die vorzugsweise wenigstens einen niederenergetischen und einen dahinter befindlichen höherenergetischen Detektor aufweisen (in den Figuren nicht näher dargestellt). Diese Verwendung derartiger Detektorpaare ermöglicht die Detektion von Spreng- und /oder Explosivstoffdetektion in Reisegepäckstücken 90.

## Patentansprüche

1. In ein Transportsystem (1) nachrüstbare Inspektionsanlage (100) zur Inspektion von Objekten (90), Insbesondere zur Erkennung von unzulässigen Gegenständen in Reisegepäckstücken, aufweisend Strahlenquellen (10, 20, 30) mit darauf ausgerichteten Detektorzeilen (11, 21, 31), die um einen Transportschacht (101) angeordnet sind, wobei die Strahlenquellen (10, 20, 30) wenigstens drei Strahlen (FX₁, FX₂, FX₃) erzeugen, die das Objekt aus wenigstens drei Strahlenebenen betrachten, **dadurch gekennzeichnet, daß**
- zur Verlägerung eines Strahlentunnels (104) der Inspektionsanlage (100) vor dem Transportschacht (101) eine mit dem Transportschacht (101) zusammenwirkende Abschirmung (102) auf oder um ein zum Transportsystem (1) gehörendes Anlagentell (3) angebracht wird.

2. Inspektionsanlage nach Anspruch 1, **dadurch gekennzeichnet, daß** dle separate Einrichtung (1) ein Transportsystem eines Check-In-Counters ist.

3. Inspektionsanlage nach Anspruch 1 oder 2, **dadurch gekennzeichnet, daß** die Länge der Abschirmung (102) eine maximale Reisegepäckstücklänge nicht unterschreitet.

4. Inspektionsanlage nach einem der Ansprüche 1 bis 3, **dadurch gekennzeichnet, daß** ein zum Transportsystem (1) gehörendes Anlagentell (4, 40) hinter dem Transportschacht (101) mit einer Abschirmung versehen ist.

5. Inspektionsanlage nach einem der Ansprüche 1 bis 4, **dadurch gekennzeichnet, daß** der maximale Abstand zwischen der ersten Strahlenquelle (10) und der letzten Strahlenquelle (30) durch die Länge des zur Verfügung stehenden Bandes (6, 60) bestimmt wird, welche eine maximale Reisegepäckstücklänge beträgt.

6. Inspektionsanlage nach Anspruch 5, **dadurch gekennzeichnet, daß** der maximale Abstand zwischen der letzten Strahlenebene (FX₃) und dem Ende des Bandes (60) eine halbe maximale Reisegepäckstücklänge nicht unterschreitet.

7. Inspektionsanlage nach Anspruch 5, **dadurch gekennzeichnet, daß** der maximale Abstand zwischen der letzten Strahlenebene (FX₃) bis zum Ende des nachfolgenden Anlagenteils (4) eine maximale Reisegepäckstücklänge nicht unterschreitet.

8. Inspektionsanlage nach einem der Ansprüche 1 bis 7, **dadurch gekennzeichnet, daß** drei Strahlenquellen (10, 20, 30) und drei Detektorzeilen (11, 21, 31) um den Transportschacht (101) angebracht sind.

9. Inspektionsanlage nach einem der vorgenannten Ansprüche 1 bis 8, **dadurch gekennzeichnet, daß** zumindest zwei Strahlenquellen (10, 20, 30) in Transportrichtung des Reisegepäckstückes (90) um den Transportschacht (101) angebracht sind.

10. Inspektionsanlage nach einem der vorgenannten Ansprüche 1 bis 9, **dadurch gekennzeichnet, daß** maximal je zwei Strahlenquellen (10,20) an einer Seite des Transportschachtes (101) angebracht sind.

11. Inspektionsanlage nach Anspruch 10, **dadurch gekennzeichnet, daß** sich eine weitere Strahlenquelle (30) an einer anderen Seite des Transportschachtes (101) befindet.

12. Inspektionsanlage nach einem der Ansprüche 1 bis 11, **dadurch gekennzeichnet, daß** sich keine Strahlenquelle (10, 20, 30) unterhalb des Transportsystems (1) bzw. des Transportschachtes (101) befindet.

13. Inspektionsanlage nach einem der Ansprüche 1 bis 12, **dadurch gekennzeichnet, daß** zwei Detektorzellen (11, 21) in einer gemeinsamen Zellenhalterung untergebracht sind.

14. Inspektionsanlage nach einem der Ansprüche 1 bis 13, **dadurch gekennzeichnet, daß** ein sich schließender Vorhang oder Rolladen in der Abschirmung (102) integriert ist.

15. Insktonsanlage nach Anspruch 14, **dadurch gekennzeichnet, daß** der Vorhang oder Rolladen am Eingang bzw. am Anfang der vorderen Abschirmung (102) angebracht ist.

16. Inspektionsanlage nach einem der Ansprüche 1 bis 15, **dadurch gekennzeichnet, daß** eine Kamera innerhalb der Abschirmung (102) vorgesehen ist.

## Claims

1. Inspection system (100), retrofittable in a transport system (1), for inspecting objects (90), in particular for detecting impermissible objects in travel baggage items, having radiation sources (10, 20, 30) with detector rows (11, 21, 31) which are aligned therewith and are arranged around a transport shaft (101), the radiation sources (10, 20, 30) producing at least three beams (FX₁, FX₂, FX₃) which view the object from at least three radiation planes, **characterized in that** a screen (102) cooperating with the transport shaft (101) is mounted on or around a system part (3) belonging to the transport system (1) in order to extend a radiation tunnel (104) of the inspection system (100).

2. Inspection system according to Claim 1, **characterized in that** the separate device (1) is a transport system of a check-in counter.

3. Inspection system according to Claim 1 or 2, **characterized in that** the length of the screen (102) does not undershoot a maximum travel baggage item length.

4. Inspection system according to one of Claims 1 to 3, **characterized in that** a system part (4, 40) belonging to the transport system (1) is provided downstream of the transport shaft (101) with a screen.

5. Inspection system according to one of Claims 1 to 4, **characterized in that** the maximum distance between the first radiation source (10) and the last radiation source (30) is determined by the length of the available belt (6, 60), which amounts to a maximum travel baggage item length.

6. Inspection system according to Claim 5, **characterized in that** the maximum distance between the last radiation plane (FX₃) and the end of the belt (60) does not undershoot a half maximum travel baggage item length.

7. Inspection system according to Claim 5, **characterized in that** the maximum distance between the last radiation plane (FX₃) and the end of the subsequent system part (4) does not undershoot a maximum travel baggage item length.

8. Inspection system according to one of Claims 1 to 7, **characterized in that** three radiation sources (10, 20, 30) and three detector rows (11, 21, 31) are mounted around the transport shaft (101).

9. Inspection system according to one of the above Claims 1 to 8, **characterized in that** at least two radiation sources (10, 20, 30) are mounted in the transport direction of the travel baggage item (90) around the transport shaft (101).

10. Inspection system according to one of the above Claims 1 to 9, **characterized in that** in each case at most two radiation sources (10, 20) are mounted on one side of the transport shaft (101).

11. Inspection system according to Claim 10, **characterized in that** a further radiation source (30) is located on another side of the transport shaft (101).

12. Inspection system according to one of Claims 1 to 11, **characterized in that** no radiation source (10, 20, 30) is located below the transport system (1) or the transport shaft (101).

13. Inspection system according to one of Claims 1 to 12, **characterized in that** two detector rows (11, 21) are accommodated in a common row holder.

14. Inspection system according to one of Claims 1 to 13, **characterized in that** an automatically closing curtain or roller shutter is integrated in the screen (102).

15. Inspection system according to Claim 14, **characterized in that** the curtain or roller shutter is mounted at the entrance or at the start of the front screen (102).

16. Inspection system according to one of Claims 1 to 15, **characterized in that** a camera is provided inside the screen (102).

## Revendications

1. Installation d'inspection (100) apte à être installée dans un système de transport (1) existant en vue de l'inspection d'objets (90), en particulier en vue de la détection d'objets interdits dans des éléments de bagages,
l'installation présentant des sources de rayonnement (10, 20, 30) sur lesquelles sont orientées des lignes de détection (11, 21, 31) disposées autour d'une galerie de transport (101),
les sources de rayonnement (10, 20, 30) produisant au moins trois faisceaux (FX₁, FX₂, FX₃) qui examinent l'objet dans au moins trois plans de rayonnement, **caractérisée en ce que**
un blindage (102) qui coopère avec la galerie de transport (101) est placé sur ou autour d'une section (3) de l'installation qui fait partie du système de transport (1) pour prolonger un tunnel de rayonnement (104) de l'installation d'inspection (100) en amont de la galerie de transport (101).

2. Installation d'inspection selon la revendication 1, **caractérisée en ce que** le dispositif séparé (1) est un système de transport d'un comptoir d'enregistrement.

3. Installation d'inspection selon les revendications 1 ou 2, **caractérisée en ce que** la longueur du blindage (102) est supérieure à la longueur maximale d'un élément de bagage.

4. Installation d'inspection selon l'une des revendications 1 à 3, **caractérisée en ce qu'**une section (4, 40) de l'installation qui fait partie du système de transport (1) est dotée d'un blindage en aval de la galerie de transport (101).

5. Installation d'inspection selon l'une des revendications 1 à 4, **caractérisée en ce que** la distance maximale entre la première source de rayonnement (10) et la dernière source de rayonnement (30) est définie par la longueur de la bande (6, 60) disponible, qui correspond à la longueur maximale d'un élément de bagage.

6. Installation d'inspection selon la revendication 5, **caractérisée en ce que** la distance maximale entre le dernier plan de rayonnement (FX₃) et l'extrémité de la bande (60) n'est pas inférieure à la moitié de la longueur maximale des éléments de bagage.

7. Installation d'inspection selon la revendication 5, **caractérisée en ce que** la distance maximale entre le dernier plan de rayonnement (FX₃) et l'extrémité de la section suivante (4) de l'installation n'est pas inférieure à la longueur maximale d'un élément de bagage.

8. Installation d'inspection selon l'une des revendications 1 à 7, **caractérisée en ce que** trois sources de rayonnement (10, 20, 30) et trois lignes de détecteurs (11, 21, 31) sont placées autour de la galerie de transport (101).

9. Installation d'inspection selon l'une des revendications 1 à 8, **caractérisée en ce qu'**au moins deux sources de rayonnement (10, 20, 30) sont placées autour de la galerie de transport (101) dans la direction de transport de l'élément de bagage (90).

10. Installation d'inspection selon l'une des revendications 1 à 9, **caractérisée en ce qu'**au plus deux sources de rayonnement (10, 20) sont placées sur un côté de la galerie de transport (101).

11. Installation d'inspection selon la revendication 10, **caractérisée en ce qu'**une autre source de rayonnement (30) est placée sur l'autre côté de la galerie de transport (101).

12. Installation d'inspection selon l'une des revendications 1 à 11, **caractérisée en ce qu'**aucune source de rayonnement (10, 20, 30) n'est située en dessous du système de transport (1) ou de la galerie de transport (101).

13. Installation d'inspection selon l'une des revendications 1 à 12, **caractérisée en ce que** deux lignes de détecteurs (11, 21) sont placées dans un support commun de lignes.

14. Installation d'inspection selon l'une des revendications 1 à 13, **caractérisée en ce qu'**un rideau de fermeture ou un volet déroulant sont intégrés dans le blindage (102).

15. Installation d'inspection selon l'une des revendications 14, **caractérisée en ce que** le rideau ou le volet déroulant sont installés à l'entrée ou au début du blindage (102) avant.

16. Installation d'inspection selon l'une des revendications 1 à 15, **caractérisée en ce qu'**une caméra est prévue à l'intérieur du blindage (102).
